# EUROPEAN PATENT SPECIFICATION

(11) **EP 4 477 273 B1**
(45) Date of publication and mention of the grant of the patent: **29.07.2026**
(21) Application number: 23179787.9
(22) Date of filing: 16.06.2023
(51) Int. Cl.: A62B 25/00, A47B 47/00

(54) **MODULAR SUPPORT FRAMEWORK FOR AN AIRCRAFT EMERGENCY OXYGEN SUPPLY SYSTEM, AIRCRAFT EMERGENCY OXYGEN SUPPLY SYSTEM, AND AIRCRAFT COMPRISING AN AIRCRAFT EMERGENCY OXYGEN SUPPLY SYSTEM**
MODULARER TRAGRAHMEN FÜR EIN FLUGZEUGNOTSAUERSTOFFVERSORGUNGSSYSTEM, FLUGZEUGNOTSAUERSTOFFVERSORGUNGSSYSTEM UND FLUGZEUG MIT EINEM FLUGZEUGNOTSAUERSTOFFVERSORGUNGSSYSTEM
CADRE DE SUPPORT MODULAIRE POUR SYSTÈME D'ALIMENTATION EN OXYGÈNE DE SECOURS D'AÉRONEF, SYSTÈME D'ALIMENTATION EN OXYGÈNE DE SECOURS D'AÉRONEF ET AÉRONEF COMPRENANT UN SYSTÈME D'ALIMENTATION EN OXYGÈNE DE SECOURS D'AÉRONEF

(43) Date of publication of application: 18.12.2024
(73) Proprietor: B/E Aerospace Systems GmbH, 23560 Lübeck (DE)
(72) Inventor: DEGENHARDT, Detlev, 23617 Stockdorf (DE)
(74) Representative: Schmitt-Nilson Schraud Waibel Wohlfrom Patentanwälte Partnerschaft mbB

(56) References cited:
- EP-A2- 1 995 473
- DE-U1- 8 718 075
- US-A1- 2017 073 072

## Description

The present invention is in the field of aircraft emergency oxygen supply systems. In particular, the present invention is related to an aircraft emergency oxygen supply system comprising a modular support framework and to an aircraft comprising such an aircraft emergency oxygen supply system.

Modern aircraft comprising a pressurized cabin are often equipped with self-sustained aircraft emergency oxygen supply systems that comprise emergency oxygen masks, which are deployed for the passengers in case of a loss of cabin pressure during flight. Each aircraft emergency oxygen supply system may comprise an oxygen source for providing oxygen gas to the oxygen masks for the passengers, in case the air pressure within the passenger cabin is lost. In case of pressure loss within the passenger cabin of an aircraft, the oxygen masks drop from a storage space, which is provided above the passenger seats.

The oxygen source may be a chemical oxygen generator which is activated by a mechanical or chemical activator. Alternatively, the oxygen source may comprise an oxygen gas storage device, for example an oxygen gas bottle, in which a defined amount of a gas comprising a predefined percentage of oxygen is stored. The oxygen source may further comprise a mechanical activator or an electric activator, for example a pyroelectric activator, for starting the supply of oxygen gas from the oxygen gas storage device to the oxygen masks. The oxygen generator may also comprise a gas supply controller for controlling the supply of the gas comprising oxygen from the oxygen storage device to the passengers via the oxygen masks.

The functional components of the aircraft emergency oxygen supply system, which include the oxygen masks, the oxygen source, and the controller, are supported within the cabin of the aircraft, in particular at a location above the passenger seats.

DE 87 18 075 U1 discloses an oxygen supply unit comprising an oxygen generator for feeding one or more oxygen masks which are accommodated together with the generator in an openable housing. The oxygen generator is fastened to a web that is detachably connected to a reinforcing frame of the housing.

As the geometries of the passenger cabin and of the functional components of the aircraft emergency oxygen supply system may vary for different types of aircraft, properly supporting the functional components is a new challenge for every type of aircraft. This may result in high costs for designing and manufacturing different support structures.

It would therefore be beneficial to provide a light weight support structure for supporting the functional components of an aircraft emergency oxygen supply system, wherein the support structure may be adapted comparably easily to varying geometries of different types of aircraft and/or to different geometries of the functional components of different aircraft emergency oxygen supply systems.

Exemplary embodiments of the invention include an aircraft emergency oxygen supply system comprising: a modular support framework; an oxygen source, which is supported by an oxygen source support bracket of the modular support framework; and an oxygen mask container, which is supported by an oxygen mask container support bracket of the modular support framework.

The modular support framework comprises a plurality of support bars of different lengths, a plurality of T-connectors and a plurality of L-connectors. Each of the plurality of T-connectors couples two or three of the plurality of support bars to each other, and each of the plurality of L-connectors couples two of the plurality of support bars to each other, respectively. The plurality of support bars, the plurality of T-connectors and the plurality of L-connectors form a support grid and define a plurality of functional component fields, thus providing a plurality of functional component locations. A functional component support bracket is arranged in at least one of the plurality of functional component fields. The functional component support bracket is attached / fixed to at least one adjacent bar of the support grid, and the functional component support bracket is configured for holding a functional component of the aircraft emergency oxygen supply system.

The modular support framework comprises a plurality of support bars having different lengths. This means that the plurality of support bars comprise support bars having at least two different lengths. The plurality of support bars may also include one or more subsets of support bars having the same length. In other words, it is not required that there is no pair of support bars having the same length.

The aircraft emergency oxygen supply system may further comprise an aircraft emergency oxygen supply system controller, which may be supported by an oxygen supply system controller support bracket of the modular support framework, and/or a removable cover hinge, which may be supported by a hinge bracket of the modular support framework, and/or a latch for selectively locking and unlocking the removable cover, which may be supported by a latch bracket. It is also possible that, in addition to / as an alternative to the oxygen source support bracket, an oxygen supply connector support bracket is provided. The oxygen supply connector support bracket may be configured for supporting an oxygen supply connector, which may be coupled / is coupleable to a central oxygen supply system of the aircraft. In this way, the modular support framework, as described herein, may also be used in situations where no local oxygen source is present, but where the oxygen masks are coupled to a central oxygen supply system of the aircraft.

Exemplary embodiments of the invention further include an aircraft, in particular an airplane or a helicopter, wherein the aircraft comprises at least one modular support framework according to an exemplary embodiment of the invention and/or wherein the aircraft comprises at least one aircraft emergency oxygen supply system according to an exemplary embodiment of the invention. The at least one aircraft emergency oxygen supply system / the at least one modular support framework may in particular be provided within a passenger cabin of the aircraft.

Exemplary embodiments of the invention also include a method of assembling an aircraft emergency oxygen supply system, wherein the method includes providing a plurality of support bars; providing a plurality of T-connectors and a plurality of L-connectors; forming a support grid of a modular support framework from the plurality of support bars, the plurality of T-connectors, and the plurality of L-connectors, with the support grid defining a plurality of functional component fields; in at least one of the plurality of functional component fields, arranging a functional component support bracket, with the functional component support bracket being attached to / fixed to at least one adjacent support bar of the support grid and with the functional component support bracket being configured for holding a functional component of the aircraft emergency oxygen supply system; and attaching at least one of an oxygen mask container and an oxygen source as a functional component of the aircraft emergency oxygen supply system to the functional component support bracket.

Exemplary embodiments of the invention provide or include an aircraft emergency oxygen supply system, which may be assembled comparably easily in different configurations. In this way, a wide variety of support grids, having different geometries, may be provided comparably easily and from a comparably low number of initial components. This may allow for assembling different support grids, which are suitable for being employed in different types of aircraft and for supporting different types of aircraft emergency oxygen supply systems, using the same components. In consequence, these components may be produced in large numbers for different types of aircraft and for different types of aircraft emergency oxygen supply systems. As a result, the efforts and costs for manufacturing modular support frameworks for aircraft emergency oxygen supply systems may be considerably reduced.

In an embodiment, multiple functional component support brackets are arranged in multiple functional component fields. In this way, the modular support framework may be configured to support multiple functional components of an aircraft emergency oxygen supply system within the support grid. By selecting the functional component support brackets and the multiple functional component fields, the modular support framework may be individually adapted to the geometries of the respective aircraft and to the geometry of the respective aircraft emergency oxygen supply system.

In an embodiment, the support grid formed by the support bars and the T- and L-connectors has a flat structure. In other words, the support grid may extend substantially in a single plane. Each of the support bars, the T-connectors, and the L-connectors may have an extension in a third dimension, in particular in a vertical direction, extending from said plane. However, in such a flat structure, there are only two degrees of freedom for arranging the support bars and the T- and L-connectors within said plane. The plane may in particular be a horizontal plane, and the two degrees of freedom may be the two dimensions within said horizontal plane for forming the support grid and for arranging the functional components within said support grid. The functional component support bracket(s) may also be substantially flat structure(s) or may have a larger extension in the third dimension than the support grid.

In an embodiment, the modular support framework comprises an oxygen source support bracket that is configured for holding an oxygen source of the aircraft emergency oxygen supply system. This allows for employing the modular support framework for supporting an oxygen source. The oxygen source may be an oxygen generator or an oxygen gas storage device, in particular an oxygen gas bottle. In addition / as an alternative, the modular support framework may comprise an oxygen supply connector support bracket, configured for holding an oxygen supply connector, which may be coupled / is coupleable to a central oxygen supply system of the aircraft.

In an embodiment, the modular support framework comprises an oxygen mask container support bracket that is configured for holding an oxygen mask container of the aircraft emergency oxygen supply system. One or more oxygen masks may be stored within the oxygen mask container. This allows for employing the modular support framework for supporting an oxygen mask container of the aircraft emergency oxygen supply system.

In an embodiment, the modular support framework comprises an oxygen supply system controller support bracket that is configured for holding an oxygen supply system controller. This allows for employing the modular support framework for supporting an oxygen supply system controller.

In an embodiment, the modular support framework comprises a hinge bracket that is configured for holding a hinge for pivotably supporting a removable cover. This allows for employing the modular support framework for supporting a hinge for pivotably supporting a removable cover.

In an embodiment, the modular support framework comprises a latch bracket that is configured for holding a latch for selectively locking and unlocking the removable cover. This allows for employing the modular support framework for supporting a latch for selectively locking and unlocking the removable cover.

Each of said at least one of the oxygen source support bracket, the oxygen supply connector support bracket, the oxygen mask container support bracket, the oxygen supply system controller support bracket, the hinge bracket, and the latch bracket may be arranged in a respective one of the plurality of functional component fields. Each of said brackets may be attached to / fixed to at least one respectively adjacent support bar. Each of said brackets may be clamped and/or glued to the at least one adjacent support bar.

In an embodiment, the plurality of support bars are made of metal. The plurality of support bars may in particular be made of aluminum or an aluminum alloy. Aluminum and aluminum alloys provide light weight support bars that have the good strength and rigidity. It is possible that all of the plurality of support bars are made of metal or that a subset of the plurality of support bars are made of metal. Both of these options are intended to be encompassed by the expression of the plurality of support bars being made of metal. In particular, it is possible that a large portion of the support bars, such as at least 80% or at least 90% are made of metal.

The plurality of support bars may also include support bars that are not made of metal and/or support bars that are made of a combination of at least one metal and at least one non-metallic material. It is possible that the plurality of support bars comprise, for example, approximately 90 % of a metal and up to 10 % of a non-metallic material.

In an embodiment, the plurality of support bars have a cross-sectional extension in a range of between 8 mm and 12 mm. The plurality of support bars may in particular have a cross-sectional extension in the range of between 9.25 mm and 9.75 mm. More particularly, the plurality of support bars may have a cross-sectional extension of about 9.525 mm (3/8 inch). Support bars having a cross-sectional extension in one of these ranges have been found to be well suited for being used in forming a modular support framework according to an exemplary embodiment of the invention. In particular, support bars having a cross-sectional extension in one of these ranges may provide a well suited compromise between a desirable good rigidity and a desirable low weight.

In an embodiment, the plurality of support bars have lengths in the range of between 50 mm and 300 mm. The modular support framework may in particular include support bars having lengths of 50 mm, 75 mm, 100 mm, 125 mm, 150 mm, 175 mm, 200 mm, 225 mm, 250 mm, 275 mm and/or 300 mm or any subset thereof.

In an embodiment, the plurality of support bars have a circular cross-section or an elliptical cross-section.

In an embodiment, the plurality of support bars have a rectangular cross-section, in particular a quadratic cross-section.

Exemplary embodiments of the present invention may in particular include a combination of support bars having a circular or an elliptical cross-section and support bars having a rectangular cross-section.

Different types of cross-sections, such as circular/elliptical and rectangular cross-sections, may be used for encoding different cross-sectional extensions and/or different lengths of the support bars. I.e. support bars having different cross-sectional extensions and/or different lengths may have different shapes of cross-sections, too. This may allow for identifying the different cross-sectional extensions and/or different lengths of the support bars by the different shapes of the cross-sections. This may in turn help in efficiently assembling the modular support framework.

Exemplary embodiments of the present invention may include L-connectors and/or T-connectors that are configured for coupling two or more support bars having different shapes of cross-sections to each other.

In an embodiment, the support bars may be solid support bars / solid support rods. Solid support bars may provide for a particularly high rigidity.

In an embodiment, the support bars may be hollow support bars / hollow support tubes, i.e. the support bars may have a hollow core extending along the longitudinal direction of the respective support bar. Hollow support bars may have a lower weight than solid support bars and may still provide for a high level of rigidity.

In an embodiment, the modular support framework may comprise a combination of solid support bars and hollow support bars. In such an embodiment, support bars that are supposed to have a particularly high rigidity may be provided as solid support bars, and support bars that require a lower level of rigidity may be provided as hollow support bars, in order to reduce the weight of the modular support framework.

In an embodiment, the tubes forming the hollow support bars may be made of a first material, and at least some of the hollow cores of the hollow support bars may be filled with a second material, for example another metal or a plastic material, in order to enhance the rigidity of the support bars. The second material may in particular be less dense than the first material.

In an embodiment, at least some of the support bars may be made of a plastics material. It is also possible that some of the support bars are made of metal and some of the support bars are made of a plastics material. The plastics material may be a polymeric material.

In an embodiment, the plurality of T-connectors and/or the plurality of L-connectors and/or the support brackets are made of a plastics material. The plastics material may be a polymeric material. The plurality of T-connectors and/or the plurality of L-connectors and/or the support brackets may in particular be formed by molding, further in particular by injection molding.

In an embodiment, the T-connectors and/or the L-connectors and/or the support brackets may be made of metal, such as aluminum.

In an embodiment, the T-connectors and/or the L-connectors and/or the support brackets may be made of a combination of metal and a plastics material, in particular a polymeric material.

In an embodiment, the support bars are fixed to the plurality of connectors by press-fitting and/or by form-fitting. The support bars may in particular be fixed to the plurality of connectors by establishing a male/female connection. It is possible that an end portion of each of the support bars is inserted into a matching connection portion of one of the connectors.

An end portion of each of the support bars may be inserted into a matching connection portion of one of the T-connectors or the L-connectors, so that a section having a length of at least 5 mm, in particular a section having a length in the range of between 5 mm and 20 mm, is inserted into the matching connection portion of the respective T-connector or L-connector.

It is also possible that at least one support bar extends through at least one of the T-connectors. In particular, a support bar may enter into a channel within the T-connector through a first opening, formed at a first end of the T-connector, and may leave the channel within the T-connector through a second opening, formed at an opposing second end of the T-connector. In other words, for one or more of the plurality of T-connectors, a support bar may extend through the cross-bar portion of the T-shaped connector. In such a case, the T-connector in question couples two of the plurality of support bars. In contrast thereto, in cases where each of the three ends of the T-connector is connected with a respective support bar, the T-connector in question couples three of the plurality of support bars.

In an alternative configuration, for one or more of the connections between support bars and T- and L-connectors, a connection portion of one of the T-connectors and/or the L-connectors may be inserted into an opening formed at a corresponding end of a respective support bar. The connection portion of the respective T-connector or the respective L-connector may be inserted into the matching end portion of the corresponding support bar, so that a section having a length of at least 5 mm, in particular a section having a length in the range of between 5 mm and 20 mm, of the respective T-connector or the respective L-connector is inserted into the support bar.

Press-fitting and/or form-fitting provide convenient and reliable methods of forming strong and reliable connections between the support bars and the connectors.

In an embodiment, the support bars are fixed to the plurality of connectors by gluing, brazing or welding. Gluing, brazing or welding allow for forming a strong and reliable connection between the support bars and the connectors.

In an embodiment, the modular support framework further includes cross connectors, which may also be referred to as X-connectors and which allow for connecting four support bars in a cross orientation / X-orientation to each other. The additional features, as described above with respect to the T- and L-connectors, may apply to the X-connectors as well.

In an embodiment, the modular support framework may include connectors that allow for connecting more than four support bars. The connectors may in particular allow for connecting the support bars in a configuration in which the support bars are oriented at angles of 30°, 45° or 60° with respect to each other. Such connectors may allow for forming a support grid having a non-rectangular geometry. Such connectors may in particular allow for forming a support grid having a 6-fold geometry, an 8-fold geometry or a 12-fold geometry, respectively. The additional features, as described above with respect to the T- and L-connectors, may apply to such other connectors as well.

In an embodiment, the plurality of T-connectors and L-connectors comprise at least one combined T-and-L-connector. In other words, the modular support framework may comprise at least one combined T-and-L-connector, with the combined T-and-L-connector including a combination of a T-connector and an L-connector. The combined T-and-L-connector counts simultaneously as one of the plurality of T-connectors, described above, and as one of the plurality of L-connectors, described above. The combined T-and-L-connector is configured for coupling three of the plurality of support bars to each other.

The combined T-and-L-connector may include a combination of a T-connector and an L-connector, wherein the combination is formed for coupling three support bars to each other in an F-type configuration, i.e. in a configuration, in which a first and a second of the three support bars extend parallel to each other and in which a third support bar extends orthogonal to the first and second support bars. Such a configuration results in an arrangement of support bars having the shape of an F. The three support bars may in particular extend in a common plane.

In an embodiment, the plurality of T-connectors and L-connectors comprise at least one combined T-and-double-L-connector. In other words, the modular support framework may comprise at least one combined T-and-double-L-connector, with the combined T-and-double-L-connector including a combination of a T-connector and two L-connectors. The combined T-and-double-L-connector counts simultaneously as one of the plurality of T-connectors, described above, and as two of the plurality of L-connectors, described above. The combined T-and-double-L-connector may be configured for coupling three of the plurality of support bars to each other.

The combined T-and-double-L-connector may include a combination of a T-connector and two L-connectors, wherein the combination is formed for coupling three support bars to each other in an E-type configuration, i.e. in a configuration, in which a first, a second, and a third support bar extend parallel to each other. The three support bars may in particular extend in a common plane.

A modular support framework that comprises at least one combined T-and-L-connector and/or at least one combined T-and-double-L-connector, as described above, may reduce the number of connectors required for forming the modular support framework. It is possible to replace individual T-connector(s) and L-connector(s) with combined T-and-L-connector(s) and/or T-and-double-L-connector(s). As a result, the efforts and costs for producing and assembling the components forming the modular support framework may be reduced.

In an embodiment, the modular support framework comprises at least one fixing element for fixing the modular support framework to a support structure within an aircraft. The at least one fixing element may be configured for fixing the modular support framework to a support structure within an aircraft passenger cabin, in particular to a support structure that is provided within an overhead supply channel formed within an aircraft passenger cabin.

Further exemplary embodiments of the invention will be described with respect to the accompanying drawings, wherein:
Figure 1 shows a schematic side view of an aircraft in accordance with an exemplary embodiment of the invention;
Figure 2 shows a longitudinal cross-sectional view of a portion of the passenger cabin of the aircraft shown in Figure 1;
Figure 3 shows a schematic view of an overhead aircraft passenger service unit housing an aircraft emergency oxygen supply system according to an exemplary embodiment of the invention;
Figure 4 depicts a schematic cross-sectional view of an aircraft emergency oxygen supply system according to an exemplary embodiment of the invention; and
Figure 5 depicts a perspective view of a modular support framework for an aircraft emergency oxygen supply system according to the invention.
Figure 6 depicts a perspective view of an aircraft emergency oxygen supply system according to an exemplary embodiment of the invention, comprising a modular support framework.
Figure 7 depicts a top view of the aircraft emergency oxygen supply system depicted in Figure 6.

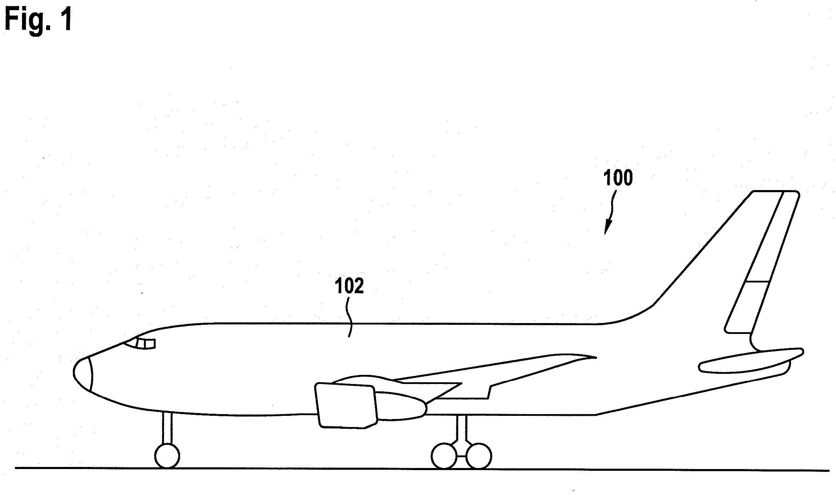

Figure 1 shows a schematic side view of an aircraft 100 in accordance with an exemplary embodiment of the invention. The aircraft 100 is a large commercial passenger air plane and has a passenger cabin 102. Although it is not explicitly shown in the figures, exemplary embodiments of the invention may be employed in helicopters or other types of aircraft as well.

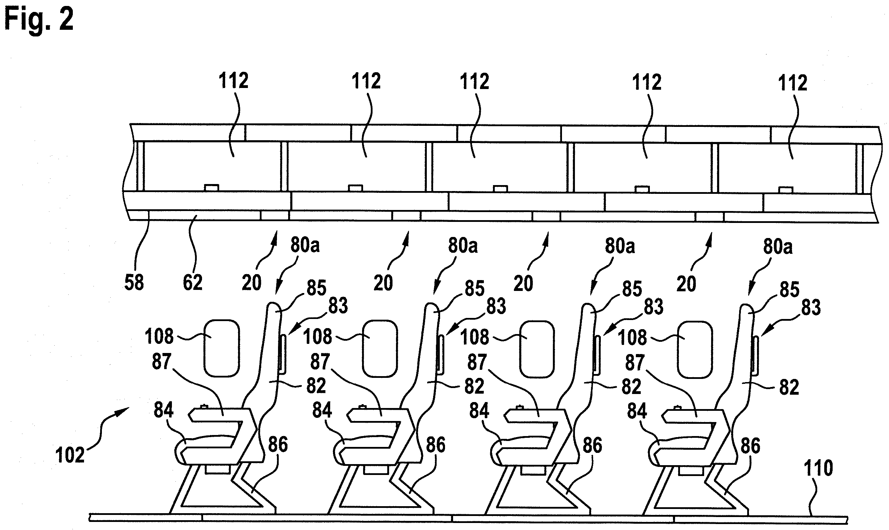

Figure 2 shows a longitudinal cross-sectional view of a portion of the passenger cabin 102 of the aircraft 100 of Figure 1.

Four seats 80a, also referred to as passenger seats 80a, are depicted in Figure 2. The passenger seats 80a are mounted to a floor 110 of the passenger cabin 102. Each of the depicted passenger seats 80a belongs to a different seating row. A plurality of seating rows are arranged along a longitudinal direction of the passenger cabin 102.

For each of the seating rows, a window 108 is provided, which allows the passengers to view the outside of the aircraft 100. Further, a plurality of overhead baggage compartments 112 are shown, which provide storage space for baggage.

Each seating row includes three passenger seats arranged next to each other. The second and third passenger seats (middle seats and window seats) of each seating row are not visible in Figure 2, as they are arranged behind and therefore hidden by the depicted first passenger seats (aisle seats) 80a.

Each of the passenger seats has a seat pan 84, a seat base 86, an arm rest 87, and a seat back (backrest) 82, including a head rest 85, and a foldable table 83, mounted to a rear side of the backrest 82. The foldable table 83 may also be referred to as passenger seat tray 83. The arm rest 87 may be pivotable around a horizontal axis. The seat base 86 supports the backrest 82 and the seat pan 84.

An overhead supply channel 62, comprising a support structure 58, extends along the longitudinal direction of the aircraft 100 above the passenger seats.

A respective overhead passenger service unit (PSU) 20 is arranged above each of the seat rows. The overhead passenger service units 20 may be arranged at least partially within the overhead supply channel 62 and they may be supported by the support structure 58 provided within the overhead supply channel 62.

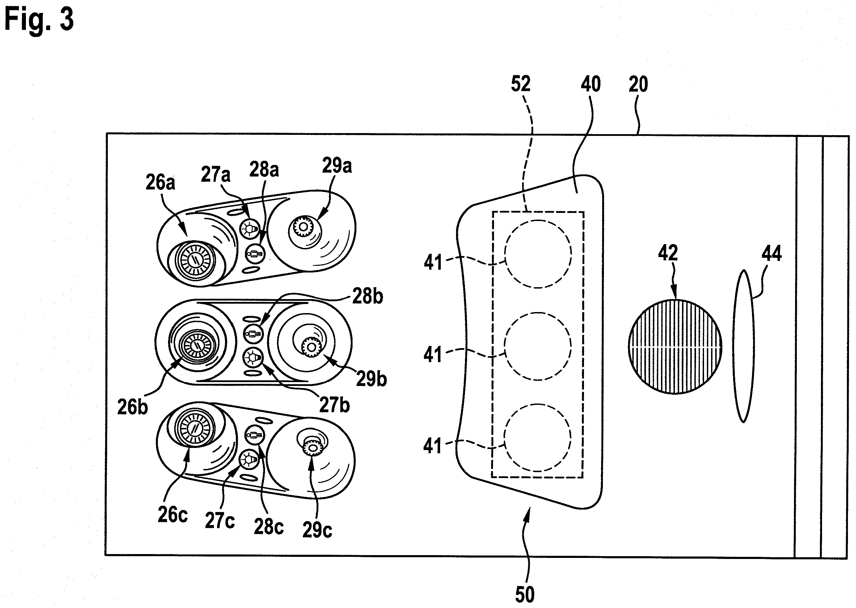

Figure 3 depicts a schematic view of an overhead aircraft passenger service unit (PSU) 20. The exemplary PSU 20 is arranged above the passengers of a single seating row and is depicted from below in Figure 3, i.e. it is depicted as it is seen from the side of a passenger sitting on one of the passenger seats below the aircraft passenger service unit 20. The aircraft passenger service unit 20 shown in Figure 3 may in particular be employed in the passenger cabin 102 shown in Figure 2.

On the side shown to the left in Figure 3, the PSU 20 comprises a row of three adjustable passenger reading lights 26a, 26b, 26c, which are arranged next to each other.

Six electrical switches 27a, 27b, 27c, 28a, 28b, 28c are provided to the right side of the passenger reading lights 26a, 26b, 26c, a respective pair of two switches next to each of the passenger reading lights 26a, 26b, 26c. One of the switches 27a, 27b, 27c of each pair is configured for switching the adjacent passenger reading light 26a, 26b, 26c, and the second switch 28a, 28b, 28c of each pair is configured for triggering a signal for calling cabin service personnel.

A row of three gaspers 29a, 29b, 29c, arranged besides each other in the lateral direction, is provided next to the switches 27a, 27b, 27c, 28a, 28b, 28c.

Next to the gaspers 29a, 29b, 29c, there is a removable cover 40 covering a compartment 50. Among other components, the compartment 50 houses an oxygen mask container 52. At least three oxygen masks 41 are stored within the oxygen mask container 52, as schematically illustrated in Figure 3. In the event of a pressure loss within the passenger cabin 102, the removable cover 40 will open, the oxygen masks 41 will drop out of the oxygen mask container 52, and each of the passengers, sitting below the aircraft passenger service unit 20, may grasp one of the oxygen masks 41. The oxygen masks 41 will be supplied with oxygen from an emergency oxygen supply (not shown), allowing the passengers to continue to breathe normally. In general, an aircraft emergency oxygen supply system according to an exemplary embodiment of the invention may be provided in the compartment 50. Said aircraft emergency oxygen supply system may comprise a modular support framework according to an exemplary embodiment of the invention. Details of exemplary embodiments of such modular support framework / of such aircraft emergency oxygen supply system will be described below.

On the side opposite to the gaspers 29a, 29b, 29c, a grid 42 is formed within the PSU 20. A loudspeaker, which may be used for delivering acoustic announcements to the passengers, is arranged behind said grid 42.

Next to the grid 42, there is a display panel 44, which may be configured for selectively displaying a plurality of visual signs (not shown), such as a "non-smoking" sign or a "fasten-your-seatbelt" sign. The display panel 44 may be illuminated from behind, in order to deliver visual information to the passengers sitting below the aircraft passenger service unit 20 and/or in other portions of the passenger cabin 102.

Different embodiments of the PSU 20, which are not explicitly shown in the figures, may be configured to be installed over rows of passenger seats that comprise more or less than three passenger seats. The PSU 20 may in particular be adapted in terms of the numbers of passenger reading lights, electrical switches, and gaspers, wherein the numbers may correspond to the number of passenger seats arranged below the given PSU 20.

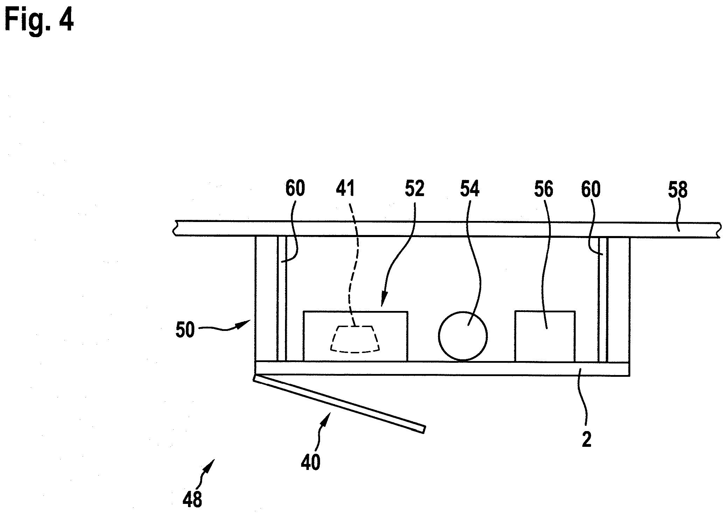

Figure 4 depicts a schematic cross-sectional view of a compartment 50, housing an aircraft emergency oxygen supply system 48 according to an exemplary embodiment of the invention. The aircraft emergency oxygen supply system 48 comprises an oxygen mask container 52, housing a plurality of oxygen masks 41, an oxygen source 54, and an oxygen supply system controller 56 for controlling the operation of the aircraft emergency oxygen supply system 48.

The oxygen mask container 52, the oxygen source 54 and the controller 56 are supported by a modular support framework 2 according to an exemplary embodiment of the invention.

The modular support framework 2 is fixed to the support structure 58 by a plurality of fixing elements 60 that are attached to the modular support framework 2. In the exemplary embodiment of Figure 4, the support structure 58 is arranged above the modular support framework 2, as seen from the position of the passenger sitting underneath the PSU 20. It is also possible that the support structure 58, carrying the modular support framework 2, is arranged below the modular support framework 2.

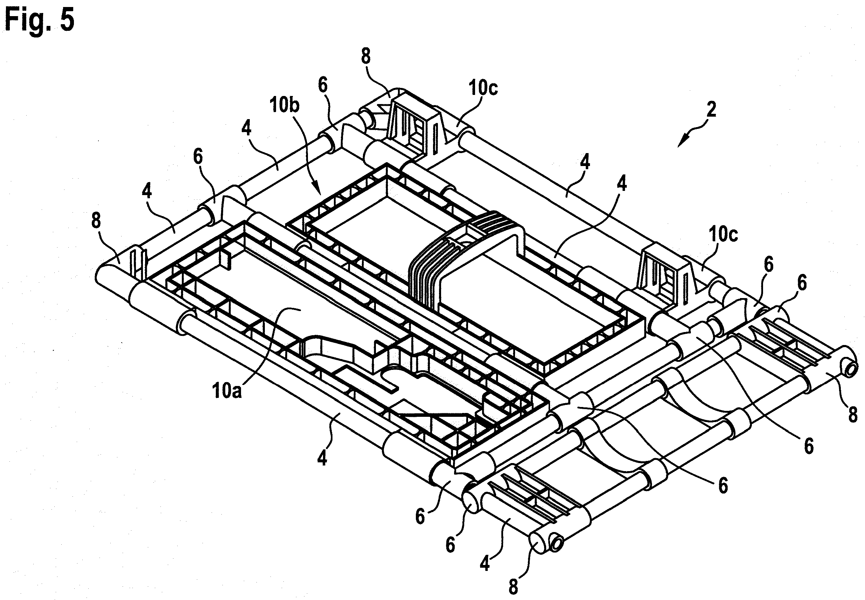

In the following, a modular support framework 2 for an aircraft emergency oxygen supply system according to the invention is described with reference to Figure 5. Said modular support framework 2 may be employed as the modular support framework 2 of the aircraft emergency oxygen supply system 48 of Figure 4. It may also be used for other arrangements of the components of other aircraft emergency oxygen supply systems.

Figure 5 depicts a perspective view of a modular support framework 2 for an aircraft emergency oxygen supply system according to the invention.

The modular support framework 2 comprises a plurality of support bars 4 having at least two different lengths, a plurality of T-connectors 6, and a plurality of L-connectors 8. In the exemplary embodiment of Figure 5, each of the plurality of T-connectors 6 couples three of the plurality of support bars 4 to each other. Each of the plurality of L-connectors 8 couples two of the plurality of support bars 4 to each other.

Although only T-connectors 6 and L-connectors 8 are depicted in Figure 5, a modular support framework 2 may also comprise other types of connectors. The modular support framework 2 may in particular include connectors that couple more than three support bars 4 to each other.

The T-connectors 6 and L-connectors 8, as depicted in Figure 5, are configured for connecting the support bars 4 in a configuration in which the support bars 4 are oriented substantially orthogonal to each other. This results in forming a rectangular support grid, as it is depicted in Figure 5.

Exemplary embodiments are, however, not restricted to such configurations. Exemplary embodiments may also include connectors (not shown) that are configured for connecting the support bars 4 in a different orientation than in an orthogonal orientation.

Exemplary embodiments may, for example, include connectors that allow for connecting two support bars 4 in a linear orientation of 0° or 180° with respect to each other and/or connectors that allow for connecting two or more support bars 4 in a configuration in which the support bars 4 are oriented at angles of 30°, 45° or 60° with respect to each other. Such connectors allow for forming a support grid having a non-rectangular geometry. Such connectors may in particular allow for forming a support grid having a 6-fold geometry, an 8-fold geometry or a 12-fold geometry.

The plurality of support bars 4 and the plurality of connectors 6, 8 form, in combination, a support grid, defining a plurality of functional component fields. Each of the functional component fields is delimited by some of the plurality of support bars 4 and by some of the plurality of connectors 6, 8. The functional component fields provide a plurality of functional component locations for accommodating functional components of the aircraft emergency oxygen supply system 48, such as the oxygen mask container 52, the oxygen source 54, and the oxygen supply system controller 56, depicted in Figure 4. The functional components may further include a hinge for pivotably mounting the removable cover 40 and/or a latch for selectively locking and unlocking the removable cover 40.

A respective functional component support bracket 10a, 10b, 10c is arranged in some of the plurality of functional component fields. Each of the functional component support brackets 10a, 10b, 10c is attached to at least one adjacent support bar 4 of the support grid and is configured for holding a functional component of the aircraft emergency oxygen supply system 48. The functional components may in particular include an oxygen mask container 52, an oxygen source 54 and/or an oxygen supply system controller 56, as depicted in Figure 4. The functional components may further include a hinge for pivotably mounting the removable cover 40 and/or a latch for selectively locking and unlocking the removable cover 40.

The support grid, as formed by the support bars 4 and the connectors 6, 8, is a flat structure extending basically in a single plane. Each of the support bars 4 and the connectors 6, 8 may have an extension in a third dimension, in particular in a vertical direction, i.e outside of the single plane, when thinking of the single plane in a geometric manner. However, there are only two degrees of freedom within the said plane, which may in particular be a horizontal plane, for forming the support grid. The functional component support brackets 10a, 10b, 10c may also have their largest extension in said single plane. They may have an extension in the third dimension that is comparable to the extension of the support bars 4 and the connectors 6, 8 in the third dimension. However, it is also possible that one or some or all of the functional components support brackets 10a, 10b, 10c have an extension in the third dimension that is considerably larger than the extension of the support bars 4 and the connectors 6, 8 in the third dimension.

The functional component support brackets 10a, 10b, 10c include an oxygen source support bracket 10a that is configured for holding an oxygen source 54 of the aircraft emergency oxygen supply system 48, an oxygen mask container support bracket 10b that is configured for holding an oxygen mask container 52 of the aircraft emergency oxygen supply system 48, and an oxygen supply system controller support bracket 10c that is configured for holding an oxygen supply system controller 56 of the aircraft emergency oxygen supply system 48.

Each of said functional component support brackets 10a, 10b, 10c is arranged and attached to at least one adjacent support bar 4 in a respective one of the plurality of functional component fields, as formed by the support bars 4 and the connectors 6, 8.

The support bars 4 may be solid support bars / solid support rods. The support bars 4 may also be hollow support bars / hollow support tubes, i.e. support bars 4 having a hollow core extending along the longitudinal direction of the respective support bar 4. It is also possible that some of the support bars 4 are solid support bars / solid support rods and some of the support bars 4 are hollow support bars / hollow support tubes.

Optionally, such hollow support tubes may be made from a first material, and at least some of the hollow cores of the support tubes may be filled with a second material, for example a metal or plastics material, in order to enhance the rigidity of the support tubes. The second material may have a lower density than the first material.

The support bars 4 may be made of metal. The support bars 4 may in particular be made of aluminum or another lightweight metal. Alternatively, at least some of the support bars 4 may be made of a plastics material. It is also possible that some of the support bars 4 are made of metal and some of the support bars 4 are made of a plastics material. The plastics material may be a polymeric material.

The connectors 6, 8 and/or the support brackets 10a, 10b, 10c may be made of a plastics material. Again, the plastics material may be a polymeric material. The plurality of connectors 6, 8 and/or support brackets 10a, 10b, 10c may in particular be made by molding, further in particular by injection molding.

The connectors 6, 8 and/or the support brackets 10a, 10b, 10c may also be made of metal, such as aluminum.

The connectors 6, 8 and/or the support brackets 10a, 10b, 10c may also be made of a combination of at least one metal and at least one plastics material.

Each of the support bars 4 may have a cross-sectional extension in the range of between 8 mm and 12 mm. Each of the support bars 4 may in particular have a cross-sectional extension in the range of between 9.25 mm and 9.75 mm. More particularly, each of the support bars 4 may have cross-sectional extension of about 9.525 mm (3/8 inch). The cross-sectional extension may be the diagonal of a rectangular / quadratic cross-section or may be the diameter / major axis of a circular / elliptical cross-section.

The plurality of support bars 4 may have lengths in the range of between 50 mm and 300 mm. The modular support framework may in particular include support bars 4 having lengths of 50 mm, 75 mm, 100 mm, 125 mm, 150 mm, 175 mm, 200 mm, 225 mm, 250 mm, 275 mm and/or 300 mm, respectively. The dimensions of the support bars 4 are, however, not restricted to these dimensions, but may include dimension which are not explicitly mentioned.

Figure 5 shows a modular support framework 2 for a particular implementation of an aircraft emergency oxygen supply system. In particular, the modular framework of Figure 5 is adapted to the particular geometric constraints of the particular implementation of the aircraft emergency oxygen supply system and/or the particular geometric constraints of the compartment housing the aircraft emergency oxygen supply system. It can be appreciated that the modular design of the modular support framework 2, which relies on the combination of support bars 4 of different lengths, T-connectors 6 and L-connectors 8, allows for providing different modular support frameworks from the same components, potentially supplemented by support bars 4 of other lengths.

All of the plurality of the support bars 4 may have the same cross-sectional extension. In alternative embodiments, the plurality of the support bars 4 may include support bars 4 having different cross-sectional extensions. For example, all support bars 4 extending in a first direction, which may be denoted the x-direction, may have a first cross-sectional extension, and all support bars 4 extending in a second direction, which may be denoted the y-direction, may have a second cross-sectional extension that differs from the first cross-sectional extension. In an embodiment comprising support bars 4 with different cross-sectional extensions, the connectors 6, 8 are configured for connecting support bars 4 having different cross-sectional extensions to each other.

The plurality of support bars 4 may have a circular cross-section or an elliptical cross-section. Alternatively, the plurality of support bars 4 may have a rectangular cross-section, in particular a quadratic cross-section.

All support bars 4 may have a cross-section of the same shape.

Alternatively, the plurality of support bars 4 may comprise support bars 4 having cross-sections of different shapes.

In case the plurality of support bars 4 have different cross-sectional extensions and/or different lengths, the support bars 4 may have cross-sections of different shapes, wherein each cross-sectional shape is associated with one of the different cross-sectional extensions and/or with one of the different lengths, respectively. This may allow for encoding the different cross-sectional extensions and/or the different lengths. In such an embodiment, the connectors 6, 8 may be encoded correspondingly, in order to ensure reliable connections of the different support bars 4 by matching connectors 6, 8.

The support bars 4 may be fixed to the plurality of connectors 6, 8 by press-fitting and/or by form-fitting. The support bars 4 may in particular be fixed to the plurality of connectors 6, 8 by forming a male/female connection. In particular, an end portion of each of the support bars 4 may be inserted into a matching connection portion of one of the connectors 6, 8. Alternatively, a connection portion of one of the connectors 6, 8 may be inserted into an opening formed at a corresponding end of the respective support bar 4.

The end portions of each of the support bars 4 may be inserted into matching connection portions of associated T-connectors 6 and/or associated L-connectors 8. The insertion may be such that a support bar section having a length of at least 5 mm, in particular a support bar section having a length in the range of between 5 mm and 20 mm, is inserted into the matching connection portion of the respective T-connector 6 or L-connector 8.

It is also possible that at least one support bar 4 extends through at least one of the T-connectors 6. In particular, a support bar 4 may enter into a channel within the T-connector 6 through a first opening, formed at a first end of the T-connector 6, and may leave the channel within the T-connector 6 through a second opening, formed at an opposing second end of the T-connector 6. In other words, for one or more of the plurality of T-connectors 6, a support bar 4 may extend through the cross-bar portion of the T-shaped connector 6.

In an alternative configuration, for one or more of the connections between support bars 4 and T-connectors 6 / L-connectors 8, a connection portion of one of the T-connectors 6 and/or the L-connectors 8 may be inserted into an opening formed at a corresponding end of an associated support bar 4. The connection portion of the respective T-connector 6 or the respective L-connector 8 may be inserted into the matching end portion of the corresponding support bar 4, so that a section having a length of at least 5 mm, in particular a section having a length in the range of between 5 mm and 20 mm, of the respective T-connector 6 or the respective L-connector 8 is inserted into the support bar 4.

Alternatively or additionally to press-fitting and/or form-fitting, the support bars 4 may be fixed to the plurality of connectors 6, 8 by gluing, brazing or welding.

As mentioned in the context of Figure 4, a plurality of fixing elements 60, which are not depicted in Figure 5, may be attached to some of the support bars 4, in order to allow attaching / fixing the modular support framework 2 to a support structure 58 of the aircraft 100.

The support structure 58 may be a support structure 58 provided within the passenger cabin 102 of the aircraft 100. The support structure 58 may in particular be a support structure 58 that is provided within / at an overhead supply channel 62 formed within the passenger cabin 102 of the aircraft.

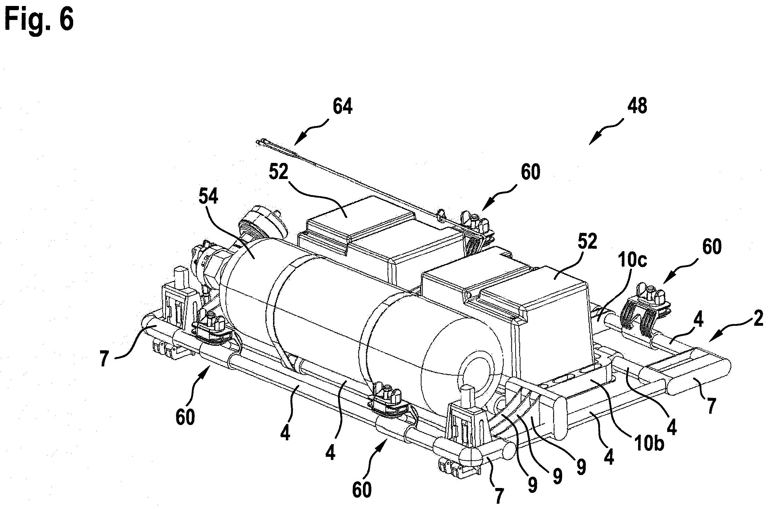

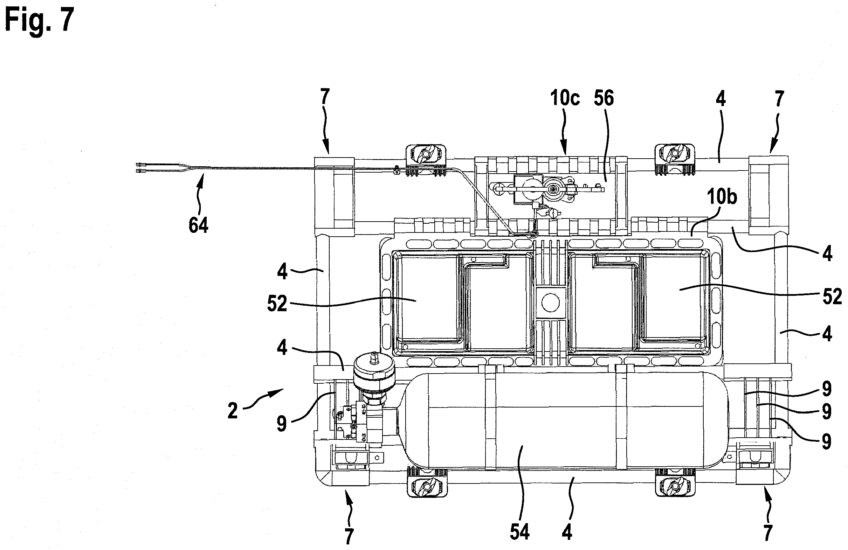

Figure 6 depicts an aircraft emergency oxygen supply system 48 in accordance with an exemplary embodiment of the invention in a perspective view. The aircraft emergency oxygen supply system 48 comprises a modular support framework 2 in accordance with an exemplary embodiment of the invention. Figure 7 depicts a top view of the aircraft emergency oxygen supply system 48 depicted in Figure 6.

Similar to the modular support framework 2 depicted in Figure 5, the modular support framework 2 depicted in Figures 6 and 7 may be employed as the modular support framework 2 of the aircraft emergency oxygen supply system 48 of Figure 4. It may also be used for other arrangements of the components of other aircraft emergency oxygen supply systems.

The modular support framework 2 comprises a plurality of support bars 4, having at least two different lengths, and a plurality of combined T-and-L-connectors 7 for coupling the support bars 4. Each of the combined T-and-L-connectors 7 includes a combination of a respective T-connector and a respective L-connector.

Each of the plurality of combined T-and-L-connectors 7 couples three of the plurality of support bars 4 to each other. Each of the combined T-and-L-connectors 7 may in particular couple three support bars 4 in an F-type configuration of support bars 4. When three support bars 4 are coupled to each other in an F-type configuration, a first one and a second one of the three support bars 4 extend parallel to each other, and the third support bar 4 extends orthogonal to the first and second support bars 4. This results in a configuration of the support bars 4 having the shape of an F.

Although only combined T-and-L-connectors 7 of the F-type are depicted in Figures 6 and 7, a modular support framework 2 for an aircraft emergency oxygen supply system according to the invention may alternatively or additionally comprise other types of connectors as well.

The modular support framework 2 may, for example, include T-connectors 6 and L-connectors 8, as they are depicted in Figure 4, in addition to the combined T-and-L-connectors 7 shown in Figures 6 and 7.

Alternatively or additionally, the modular support framework 2 may further comprise at least one combined T-and-double-L-connector of an E-type, which is not explicitly shown in the figures. A combined T-and-double-L-connector of the E-type is configured for connecting three support bars 4 extending in a common plane, such that the three support bars 4 extend parallel to each other, forming the horizontal bars of the letter E shape.

In the embodiment of Figures 6 and 7, the combined T-and-L-connectors 7 are configured for connecting the support bars 4 in a configuration in which the support bars 4 are oriented substantially orthogonal to each other. Such an orthogonal orientation of the support bars 4 results in a rectangular support grid of support bars 4, as it is depicted in Figures 6 and 7. Exemplary embodiments of the invention are, however, not restricted to such a configuration. Exemplary embodiments of the invention may also include combined T-and-L-connectors that are configured for connecting the support bars 4 in other orientations.

The plurality of support bars 4 and the plurality of combined T-and-L-connectors 7 form, in combination, a support grid, defining a plurality of functional component fields. Each of the functional component fields is delimited by some of the plurality of support bars 4 and by some of the plurality of combined T-and-L-connectors 7. The functional component fields provide a plurality of functional component locations for accommodating functional components of the aircraft emergency oxygen supply system 48, such as two oxygen mask containers 52, an oxygen source 54, and an oxygen supply system controller 56. The oxygen supply system controller 56 is visible in Figure 7, but not in Figure 6. In Figure 6, the view onto the oxygen supply system controller 56 is blocked by the oxygen mask containers 52.

An electric power supply line 64, comprising at least two electric conductors, which are electrically isolated from each other, is electrically coupled to the oxygen supply system controller 56 for supplying electric power to the oxygen supply system controller 56.

A respective functional component support bracket 10a, 10b, 10c is arranged in some of the plurality of functional component fields. Each of the functional component support brackets 10a, 10b, 10c is attached to at least one adjacent support bar 4 of the support grid and is configured for holding a functional component of the aircraft emergency oxygen supply system 48. The functional components may in particular include the oxygen mask containers 52, the oxygen source 54 and/or an oxygen supply system controller 56, as depicted in Figures 6 and 7.

The support grid, as formed by the support bars 4 and the combined T-and-L-connectors 7, is a flat structure extending basically in a single plane. Each of the support bars 4 and the combined T-and-L-connectors 7 may have an extension in a third dimension, in particular in a vertical direction, i.e outside of the single plane, when thinking of the single plane in a geometric manner. The combined T-and-L-connectors 7 may in particular have a three-dimensional structure including additional support surfaces and/or ribs 9, as depicted in Figures 6 and 7.

However, there are only two degrees of freedom within the single plane, which may in particular be a horizontal plane, for forming the support grid. The functional component support brackets 10a, 10b, 10c may also have their largest extension in said single plane. They may have an extension in the third dimension that is comparable to the extension of the support bars 4 and the combined T-and-L-connectors 7 in the third dimension. However, it is also possible that one or some or all of the functional components support brackets 10a, 10b, 10c have an extension in the third dimension that is considerably larger than the extension of the support bars 4 and the combined T-and-L-connectors 7 in the third dimension.

The functional component support brackets 10a, 10b, 10c include an oxygen source support bracket 10a that is configured for holding an oxygen source of the aircraft emergency oxygen supply system 48, at least one oxygen mask container support bracket 10b that is configured for holding at least one of the oxygen mask containers 52 of the aircraft emergency oxygen supply system 48, and an oxygen supply system controller support bracket 10c that is configured for holding an oxygen supply system controller 56 of the aircraft emergency oxygen supply system 48.

If the aircraft emergency oxygen supply system 48 comprises a plurality of oxygen mask containers 52, the functional component support brackets 10a, 10b, 10c may include a single oxygen mask container support bracket 10b that is configured for holding the plurality of the oxygen mask containers 52. Alternatively, the functional component support brackets 10a, 10b, 10c may include a plurality of oxygen mask container support brackets, wherein each of the plurality of oxygen mask container support brackets is configured for holding at least one of the plurality of the oxygen mask containers 52, respectively.

Similar to the embodiment depicted in Figure 5, each of said functional component support brackets 10a, 10b, 10c is arranged and attached to at least one adjacent support bar 4 in a respective one of the plurality of functional component fields, as formed by the support bars 4 and the combined T-and-L-connectors 7.

The support bars 4 may be solid support bars / solid support rods. The support bars 4 may also be hollow support bars / hollow support tubes, i.e. support bars 4 having a hollow core extending along the longitudinal direction of the respective support bar 4. It is also possible that some of the support bars 4 are solid support bars / solid support rods and some of the support bars 4 are hollow support bars / hollow support tubes.

Optionally, such hollow support tubes may be made from a first material, and at least some of the hollow cores of the support tubes may be filled with a second material, for example a metal or plastics material, in order to enhance the rigidity of the support tubes. The second material may have a lower density than the first material.

The support bars 4 may be made of metal. The support bars 4 may in particular be made of aluminum or another lightweight metal. Alternatively, at least some of the support bars 4 may be made of a plastics material. It is also possible that some of the support bars 4 are made of metal and some of the support bars 4 are made of a plastics material. The plastics material may be a polymeric material.

Each of the support bars 4 may have a cross-sectional extension in the range of between 8 mm and 12 mm. Each of the support bars 4 may in particular have a cross-sectional extension in the range of between 9.25 mm and 9.75 mm. More particularly, each of the support bars 4 may have cross-sectional extension of about 9.525 mm (3/8 inch). The cross-sectional extension may be the diagonal of a rectangular / quadratic cross-section or may be the diameter / major axis of a circular / elliptical cross-section.

The plurality of support bars 4 may have lengths in the range of between 50 mm and 300 mm. The modular support framework may in particular include support bars 4 having lengths of 50 mm, 75 mm, 100 mm, 125 mm, 150 mm, 175 mm, 200 mm, 225 mm, 250 mm, 275 mm and/or 300 mm, respectively. The dimensions of the support bars 4 are, however, not restricted to these dimensions, but may include dimension which are not explicitly mentioned.

The combined T-and-L-connectors 7 and/or the support brackets 10a, 10b, 10c may be made of a plastics material. Again, the plastics material may be a polymeric material. The plurality of combined T-and-L-connectors 7 and/or support brackets 10a, 10b, 10c may in particular be made by molding, further in particular by injection molding.

The combined T-and-L-connectors 7 and/or the support brackets 10a, 10b, 10c may also be made of metal, such as aluminum.

The combined T-and-L-connectors 7 and/or the support brackets 10a, 10b, 10c may also be made of a combination of at least one metal and at least one plastics material.

Figures 6 and 7 show a modular support framework 2 for a particular implementation of an aircraft emergency oxygen supply system 48. In particular, the modular framework of combined T-and-L-connectors 7 is adapted to the particular geometric constraints of the particular implementation of the aircraft emergency oxygen supply system 48 and/or the particular geometric constraints of the compartment housing the aircraft emergency oxygen supply system 48. It can be appreciated that the modular design of the modular support framework 2, which relies on the combination of support bars 4 of different lengths and combined T-and-L-connectors 7, allows for providing different modular support frameworks from the same components, potentially supplemented by support bars 4 of other lengths. Also, such different modular support frameworks may additionally rely on pure T-connectors and/or pure L-connectors.

All of the plurality of the support bars 4 may have the same cross-sectional extension. In alternative embodiments, the plurality of the support bars 4 may include support bars 4 having different cross-sectional extensions. For example, all support bars 4 extending in a first direction, which may be denoted the x-direction, may have a first cross-sectional extension, and all support bars 4 extending in a second direction, which may be denoted the y-direction, may have a second cross-sectional extension that differs from the first cross-sectional extension. In an embodiment comprising support bars 4 with different cross-sectional extensions, the combined T-and-L-connectors 7 are configured for connecting support bars 4 having different cross-sectional extensions to each other.

The plurality of support bars 4 may have a circular cross-section or an elliptical cross-section. Alternatively, the plurality of support bars 4 may have a rectangular cross-section, in particular a quadratic cross-section.

All support bars 4 may have a cross-section of the same shape.

Alternatively, the plurality of support bars 4 may comprise support bars 4 having cross-sections of different shapes.

In case the plurality of support bars 4 have different cross-sectional extensions and/or different lengths, the support bars 4 may have cross-sections of different shapes, wherein each cross-sectional shape is associated with one of the different cross-sectional extensions and/or with one of the different lengths, respectively. This may allow for encoding the different cross-sectional extensions and/or the different lengths. In such an embodiment, the combined T-and-L-connectors 7 may be encoded correspondingly, in order to ensure reliable connections of the different support bars 4 by matching combined T-and-L-connectors 7.

The support bars 4 may be fixed to the plurality of combined T-and-L-connectors 7 by press-fitting and/or by form-fitting. The support bars 4 may in particular be fixed to the plurality of combined T-and-L-connectors 7 by forming a male/female connection. In particular, an end portion of each of the support bars 4 may be inserted into a matching connection portion of one of the combined T-and-L-connectors 7.

The end portions of each of the support bars 4 may be inserted into matching connection portions of associated combined T-and-L-connectors 7. The insertion may be such that a support bar section having a length of at least 5 mm, in particular a support bar section having a length in the range of between 5 mm and 20 mm, is inserted into the matching connection portion of the respective combined T-and-L-connector 7.

In an alternative configuration, for one or more of the connections between support bars 4 and combined T-and-L-connectors 7, a connection portion of one of the combined T-and-L-connectors 7 may be inserted into an opening formed at a corresponding end of an associated support bar 4. The connection portion of the respective combined T-and-L-connector 7 may be inserted into the matching end portion of the corresponding support bar 4, so that a section having a length of at least 5 mm, in particular a section having a length in the range of between 5 mm to 20 mm, of the respective combined T-and-L-connector 7 is inserted into the support bar 4.

Alternatively or additionally to press-fitting and/or form-fitting, the support bars 4 may be fixed to the plurality of combined T-and-L-connectors 7 by gluing, brazing or welding.

As mentioned above in the context of Figure 4, a plurality of fixing elements 60 may be attached to some of the support bars 4, in order to allow attaching / fixing the modular support framework 2 to a support structure 58 of the aircraft 100. In the exemplary embodiment of Figures 6 and 7, the plurality of fixing elements 60 are connection clips that are elastically / resiliently fixed to some of the support bars 4.

The support structure 58 may be a support structure 58 provided within the passenger cabin 102 of the aircraft 100. The support structure 58 may in particular be a support structure 58 that is provided within / at an overhead supply channel 62 formed within the passenger cabin 102 of the aircraft.

While concrete implementations of modular support frameworks 2 are depicted in Figures 5, 6, and 7, new / adapted versions of modular support frameworks 2 may be provided comparably easily for different aircraft emergency oxygen supply systems and/or different aircraft types. In particular, providing support bars 4 having different lengths may allow for adapting the dimensions of the modular support framework to different dimensions of the compartment 50 and/or to different dimensions of the functional components of the aircraft emergency oxygen supply system 48 and/or to different dimensions of the support brackets 10a, 10b, 10c. It is also possible that the support brackets 10a, 10b, 10c are adapted to the particular implementations of the functional components of the aircraft emergency oxygen supply system and/or to the dimensions of the functional component fields of the support grid of the modular support framework. Further, the described pure T-connectors, pure L-connectors, combined T-and-L-connectors, and other described connectors may be freely combined to achieve a desired support grid.

While the invention has been described with reference to exemplary embodiments, it will be understood by those skilled in the art that various changes may be made for elements thereof without departing from the scope of the invention. In addition many modifications may be made to adopt a particular situation or material to the teachings of the invention without departing from the essential scope thereof. Therefore, it is intended that the invention not be limited to the particular embodiment disclosed, but that the invention include all embodiments falling within the scope of the following claims.

## Claims

1. Aircraft emergency oxygen supply system (48), comprising
a modular support framework (2) comprising:
a plurality of support bars (4) of different lengths; and
a plurality of T-connectors (6), with each of the plurality of T-connectors (6) coupling two or three of the plurality of support bars (4) to each other, and a plurality of L-connectors (8), with each of the plurality of L-connectors (8) coupling two of the plurality of support bars (4) to each other;
wherein the plurality of support bars (4), the plurality of T-connectors (6), and the plurality of L-connectors (8) form a support grid, defining a plurality of functional component fields;
wherein, in at least one of the plurality of functional component fields, a functional component support bracket (10a, 10b, 10c) is arranged, with the functional component support bracket (10a, 10b, 10c) being attached to at least one adjacent support bar (4) of the support grid and with the functional component support bracket (10a, 10b, 10c) being configured for holding a functional component (52, 54, 56) of the aircraft emergency oxygen supply system (48);
the aircraft emergency oxygen supply system (48) further comprising:
an oxygen mask container (52), which is supported as a functional component of the aircraft emergency oxygen supply system (48) by an oxygen mask container support bracket (10b) of the modular support framework (2); and
an oxygen source (54), which is supported as a functional component of the aircraft emergency oxygen supply system (48) by an oxygen source support bracket (10a) of the modular support framework (2).

2. Aircraft emergency oxygen supply system (48) according to claim 1, wherein the modular support framework (2) further comprises at least one of:
an oxygen supply system controller support bracket (10c), configured for holding an oxygen supply system controller (56),
a hinge bracket, configured for holding a hinge for pivotably supporting a removable cover (40);
a latch bracket configured for holding a latch for selectively locking and unlocking the removable cover (40);
wherein each of said at least one of the oxygen supply system controller support bracket (10c), the hinge bracket, and the latch bracket is arranged in a respective one of the plurality of functional component fields.

3. Aircraft emergency oxygen supply system (48) according to claim 1 or 2, wherein the plurality of support bars (4) are made of metal, wherein the plurality of support bars (4) are in particular made of aluminum.

4. Aircraft emergency oxygen supply system (48) according to any of the preceding claims, wherein the plurality of support bars (4) have a cross-sectional extension in the range of between 8 mm and 12 mm; wherein the plurality of support bars (4) in particular have a cross-sectional extension in the range of between 9.25 mm and 9.75 mm; wherein plurality of support bars (4) more particularly have cross-sectional extension of about 9.525 mm (3/8 inch).

5. Aircraft emergency oxygen supply system (48) according to any of the preceding claims, wherein the plurality of support bars (4) have a circular cross-section or an elliptical cross-section, or wherein the plurality of support bars (4) have a rectangular cross-section, in particular a quadratic cross-section.

6. Aircraft emergency oxygen supply system (48) according to any of the preceding claims, wherein the plurality of support bars (4) have lengths in the range of between 50 mm and 300 mm, wherein the modular support framework (2) in particular includes support bars (4) having lengths of 50 mm, 75 mm, 100 mm, 125 mm, 150 mm, 175 mm, 200 mm, 225 mm, 250 mm, 275 mm and/or 300 mm.

7. Aircraft emergency oxygen supply system (48) according to any of the preceding claims, wherein the plurality of support bars (4) are a plurality of support tubes having a hollow core.

8. Aircraft emergency oxygen supply system (48) according to any of the preceding claims, wherein the plurality of T-connectors (6) and the plurality of L-connectors (8) are made of a plastics material.

9. Aircraft emergency oxygen supply system (48) according to claim 8, wherein the plurality of T-connectors (6) and the plurality of L-connectors (8) are made by molding, in particular by injection molding.

10. Aircraft emergency oxygen supply system (48) according to any of the preceding claims, wherein the plurality of support bars (4) are fixed to the plurality of T-connectors (6) and the plurality of L-connectors (8) by press-fitting and/or by gluing.

11. Aircraft emergency oxygen supply system (48) according to any of the preceding claims, wherein the plurality of T-connectors and L-connectors comprise at least one combined T-and-L-connector (7), which is configured for coupling three support bars (4) in an F-type configuration, in which a first one and a second one of the three support bars (4) extend parallel to each other and a third support bar (4) extends orthogonal to the first and second support bars (4).

12. Aircraft emergency oxygen supply system (48) according to any of the preceding claims, further comprising at least one fixing element (60) for fixing the modular support framework (2) to a support structure (58) within an aircraft (100).

13. Aircraft (100), in particular an airplane or a helicopter, comprising an aircraft emergency oxygen supply system (48) according to any of the preceding claims, wherein the aircraft emergency oxygen supply system (48) is in particular provided within a passenger cabin (102) of the aircraft (100).

14. Method of assembling an aircraft emergency oxygen supply system (48), wherein the method includes:
providing a plurality of support bars (4);
providing a plurality of T-connectors (6) and a plurality of L-connectors (8);
forming a support grid of a modular support framework (2) from the plurality of support bars (4), the plurality of T-connectors (6), and the plurality of L-connectors (8), the support grid defining a plurality of functional component fields;
in at least one of the plurality of functional component fields, arranging a functional component support bracket (10a, 10b, 10c), with the functional component support bracket (10a, 10b, 10c) being attached to at least one adjacent support bar (4) of the support grid and with the functional component support bracket (10a, 10b, 10c) being configured for holding a functional component (52, 54, 56) of the aircraft emergency oxygen supply system (48); and
attaching at least one of an oxygen mask container (52) and an oxygen source (54) as a functional component (52, 54, 56) of the aircraft emergency oxygen supply system (48) to the functional component support bracket (10a, 10b, 10c).

15. Method according to claim 14, further comprising the step of attaching the modular support framework (2) to a support structure (58) within an aircraft (100), in particular attaching the modular support framework (2) to a support structure (58) within a passenger cabin (102) of an aircraft (100).

## Patentansprüche

1. Flugzeug-Notfallsauerstoffversorgungssystem (48), umfassend
ein modulares Stützgerüst (2), das umfasst:
eine Vielzahl von Stützstangen (4) unterschiedlicher Länge; und
eine Vielzahl von T-Verbindern (6), wobei jeder der Vielzahl von T-Verbindern (6)
zwei oder drei der Vielzahl von Stützstangen (4) miteinander verbindet, und eine
Vielzahl von L-Verbindern (8), wobei jeder der Vielzahl von L-Verbindern (8) zwei
der Vielzahl von Stützstangen (4) miteinander verbindet;
wobei die Vielzahl von Stützstangen (4), die Vielzahl von T-Verbindern (6) und die Vielzahl von L-Verbindern (8) ein Stützgitter bilden, das eine Vielzahl von Funktionskomponentenfeldern definiert;
wobei in mindestens einem der Vielzahl von Funktionskomponentenfeldern eine Funktionskomponentenhalterung (10a, 10b, 10c) angeordnet ist, wobei die Funktionskomponentenhalterung (10a, 10b, 10c) an mindestens einer benachbarten Stützstange (4) des Stützgitters befestigt ist und wobei die Funktionskomponentenhalterung (10a, 10b, 10c) zum Halten einer Funktionskomponente (52, 54, 56) des Flugzeug-Notfallsauerstoffversorgungssystems (48) konfiguriert ist;
wobei das Flugzeug-Notfallsauerstoffversorgungssystem (48) ferner umfasst:
einen Sauerstoffmaskenbehälter (52), der als Funktionskomponente des Flugzeug-Notfallsauerstoffversorgungssystems (48) von einer Sauerstoffmaskenbehälterhalterung (10b) des modularen Stützgerüsts (2) getragen wird; und
eine Sauerstoffquelle (54), die als Funktionskomponente des Flugzeug-Notfallsauerstoffversorgungssystems (48) von einer Sauerstoffquellenhalterung (10a) des modularen Stützgerüsts (2) getragen wird.

2. Flugzeug-Notfallsauerstoffversorgungssystem (48) nach Anspruch 1, wobei
das modulare Stützgerüst (2) ferner mindestens eines umfasst von:
einer Sauerstoffversorgungssystem-Steuerungshalterung (10c), die zum Halten einer Sauerstoffversorgungssystem-Steuerung (56) konfiguriert ist,
einer Scharnierhalterung, die zum Halten eines Scharniers zum schwenkbaren Tragen einer abnehmbaren Abdeckung (40) konfiguriert ist;
einer Verriegelungshalterung, die zum Halten einer Verriegelung zum
selektiven
Verriegeln und Entriegeln der abnehmbaren Abdeckung (40) konfiguriert ist;
wobei jede der mindestens einen Sauerstoffversorgungssystem-Steuerungshalterung (10c), der Scharnierhalterung und der Verriegelungshalterung in einem jeweiligen der Vielzahl von Funktionskomponentenfeldern angeordnet ist.

3. Flugzeug-Notfallsauerstoffversorgungssystem (48) nach Anspruch 1 oder 2,
wobei die Vielzahl von Stützstangen (4) aus Metall hergestellt sind, wobei die Vielzahl von Stützstangen (4) insbesondere aus Aluminium hergestellt sind.

4. Flugzeug-Notfallsauerstoffversorgungssystem (48) nach einem der vorhergehenden Ansprüche, wobei die Vielzahl von Stützstangen (4) eine Querschnittsausdehnung im Bereich zwischen 8 mm und 12 mm aufweisen; wobei die Vielzahl von Stützstangen (4) insbesondere eine Querschnittsausdehnung im Bereich zwischen 9,25 mm und 9,75 mm aufweisen; wobei die Vielzahl von Stützstangen (4) spezieller eine Querschnittsausdehnung von etwa 9,525 mm (3/8 Zoll) aufweisen.

5. Flugzeug-Notfallsauerstoffversorgungssystem (48) nach einem der vorhergehenden Ansprüche, wobei die Vielzahl von Stützstangen (4) einen kreisförmigen Querschnitt oder einen elliptischen Querschnitt aufweisen, oder wobei die Vielzahl von Stützstangen (4) einen rechteckigen Querschnitt, insbesondere einen quadratischen Querschnitt aufweisen.

6. Flugzeug-Notfallsauerstoffversorgungssystem (48) nach einem der vorhergehenden Ansprüche, wobei die Vielzahl von Stützstangen (4) Längen im Bereich zwischen 50 mm und 300 mm aufweisen, wobei das modulare Stützgerüst (2) insbesondere Stützstangen (4) mit Längen von 50 mm, 75 mm, 100 mm, 125 mm, 150 mm, 175 mm, 200 mm, 225 mm, 250 mm, 275 mm und/oder 300 mm umfasst.

7. Flugzeug-Notfallsauerstoffversorgungssystem (48) nach einem der vorhergehenden Ansprüche, wobei die Vielzahl von Stützstangen (4) eine Vielzahl von Stützrohren mit einem hohlen Kern sind.

8. Flugzeug-Notfallsauerstoffversorgungssystem (48) nach einem der vorhergehenden Ansprüche, wobei die Vielzahl von T-Verbindern (6) und die Vielzahl von L-Verbindern (8) aus einem Kunststoffmaterial hergestellt sind.

9. Flugzeug-Notfallsauerstoffversorgungssystem (48) nach Anspruch 8,
wobei die Vielzahl von T-Verbindern (6) und die Vielzahl von L-Verbindern (8) durch Formgebung, insbesondere durch Spritzgießen, hergestellt sind.

10. Flugzeug-Notfallsauerstoffversorgungssystem (48) nach einem der vorhergehenden Ansprüche, wobei die Vielzahl von Stützstangen (4) durch Presspassung und/oder durch Kleben an der Vielzahl von T-Verbindern (6) und der Vielzahl von L-Verbindern (8) befestigt sind.

11. Flugzeug-Notfallsauerstoffversorgungssystem (48) nach einem der vorhergehenden Ansprüche, wobei die Vielzahl von T-Verbindern und L-Verbindern mindestens einen kombinierten T-und-L-Verbinder (7) umfasst, der zum Verbinden von drei Stützstangen (4) in einer F-artigen Konfiguration konfiguriert ist, bei der eine erste und eine zweite der drei Stützstangen (4) parallel zueinander verlaufen und eine dritte Stützstange (4) orthogonal zu der ersten und zweiten Stützstange (4) verläuft.

12. Flugzeug-Notfallsauerstoffversorgungssystem (48) nach einem der vorhergehenden Ansprüche, ferner umfassend mindestens ein Befestigungselement (60) zum Befestigen des modularen Stützgerüsts (2) an einer Tragstruktur (58) innerhalb eines Flugzeugs (100).

13. Flugzeug (100), insbesondere ein Flugzeug oder ein Hubschrauber, umfassend ein Flugzeug-Notfallsauerstoffversorgungssystem (48) nach einem der vorhergehenden Ansprüche, wobei das Flugzeug-Notfallsauerstoffversorgungssystem (48) insbesondere innerhalb einer Passagierkabine (102) des Flugzeugs (100) vorgesehen ist.

14. Verfahren zum Zusammenbau eines Flugzeug-Notfallsauerstoffversorgungssystems (48), wobei das Verfahren umfasst:
Bereitstellen einer Vielzahl von Stützstangen (4);
Bereitstellen einer Vielzahl von T-Verbindern (6) und einer Vielzahl von L-Verbindern (8);
Bilden eines Stützgitters eines modularen Stützgerüsts (2) aus der Vielzahl von Stützstangen (4), der Vielzahl von T-Verbindern (6) und der Vielzahl von L-Verbindern (8), wobei das Stützgitter eine Vielzahl von Funktionskomponentenfeldern definiert;
in mindestens einem der Vielzahl von Funktionskomponentenfeldern, Anordnen einer Funktionskomponentenhalterung (10a, 10b, 10c), wobei die Funktionskomponentenhalterung (10a, 10b, 10c) an mindestens einer benachbarten Stützstange (4) des Stützgitters befestigt wird und wobei die Funktionskomponentenhalterung (10a, 10b, 10c) zum Halten einer Funktionskomponente (52, 54, 56) des Flugzeug-Notfallsauerstoffversorgungssystems (48) konfiguriert ist; und
Befestigen mindestens eines von einem Sauerstoffmaskenbehälter (52) und einer Sauerstoffquelle (54) als Funktionskomponente (52, 54, 56) des Flugzeug-Notfallsauerstoffversorgungssystems (48) an der Funktionskomponentenhalterung (10a, 10b, 10c).

15. Verfahren nach Anspruch 14, ferner umfassend den Schritt des Befestigens des modularen Stützgerüsts (2) an einer Tragstruktur (58) innerhalb eines Flugzeugs (100), insbesondere des Befestigens des modularen Stützgerüsts (2) an einer Tragstruktur (58) innerhalb einer Passagierkabine (102) eines Flugzeugs (100).

## Revendications

1. Système d'alimentation en oxygène d'urgence pour aéronef (48), comprenant
un cadre de support modulaire (2) comprenant :
une pluralité de barres de support (4) de différentes longueurs ; et
une pluralité de connecteurs en T (6), chacun des connecteurs en T (6) de la pluralité couplant deux ou trois des barres de support (4) de la pluralité entre elles, et une pluralité de connecteurs en L (8), chacun des connecteurs en L (8) de la pluralité couplant deux des barres de support (4) de la pluralité entre elles ;
dans lequel la pluralité de barres de support (4), la pluralité de connecteurs en T (6) et la pluralité de connecteurs en L (8) forment une grille de support, définissant une pluralité de champs de composants fonctionnels ;
dans lequel, dans au moins l'un de la pluralité de champs de composants fonctionnels, un support de composant fonctionnel (10a, 10b, 10c) est disposé, le support de composant fonctionnel (10a, 10b, 10c) étant fixé à au moins une barre de support adjacente (4) de la grille de support et le support de composant fonctionnel (10a, 10b, 10c) étant configuré pour maintenir un composant fonctionnel (52, 54, 56) du système d'alimentation en oxygène d'urgence pour aéronef (48) ;
le système d'alimentation en oxygène d'urgence pour aéronef (48) comprenant en outre :
un conteneur de masque à oxygène (52), qui est supporté en tant que composant fonctionnel du système d'alimentation en oxygène d'urgence pour aéronef (48) par un support de conteneur de masque à oxygène (10b) du cadre de support modulaire (2) ; et
une source d'oxygène (54), qui est supportée en tant que composant fonctionnel du système d'alimentation en oxygène d'urgence pour aéronef (48) par un support de source d'oxygène (10a) du cadre de support modulaire (2).

2. Système d'alimentation en oxygène d'urgence pour aéronef (48) selon la revendication 1, dans lequel le cadre de support modulaire (2) comprend en outre au moins l'un des éléments suivants :
un support de contrôleur de système d'alimentation en oxygène (10c),
configuré pour maintenir un contrôleur de système d'alimentation en oxygène (56),
un support de charnière, configuré pour maintenir une charnière pour supporter de manière pivotante un couvercle amovible (40) ;
un support de loquet configuré pour maintenir un loquet pour verrouiller et déverrouiller sélectivement le couvercle amovible (40) ;
dans lequel chacun dudit au moins l'un du support de contrôleur de système d'alimentation en oxygène (10c), du support de charnière et du support de loquet est disposé dans un champ respectif de la pluralité de champs de composants fonctionnels.

3. Système d'alimentation en oxygène d'urgence pour aéronef (48) selon la revendication 1 ou 2, dans lequel la pluralité de barres de support (4) sont fabriquées en métal, dans lequel la pluralité de barres de support (4) sont en particulier fabriquées en aluminium.

4. Système d'alimentation en oxygène d'urgence pour aéronef (48) selon l'une quelconque des revendications précédentes, dans lequel la pluralité de barres de support (4) ont une extension en coupe transversale dans la plage comprise entre 8 mm et 12 mm ; dans lequel la pluralité de barres de support (4) ont en particulier une extension en coupe transversale dans la plage comprise entre 9,25 mm et 9,75 mm ; dans lequel la pluralité de barres de support (4) ont plus particulièrement une extension en coupe transversale d'environ 9,525 mm (3/8 pouce).

5. Système d'alimentation en oxygène d'urgence pour aéronef (48) selon l'une quelconque des revendications précédentes, dans lequel la pluralité de barres de support (4) ont une section transversale circulaire ou une section transversale elliptique, ou dans lequel la pluralité de barres de support (4) ont une section transversale rectangulaire, en particulier une section transversale carrée.

6. Système d'alimentation en oxygène d'urgence pour aéronef (48) selon l'une quelconque des revendications précédentes, dans lequel la pluralité de barres de support (4) ont des longueurs dans la plage comprise entre 50 mm et 300 mm, dans lequel le cadre de support modulaire (2) comprend en particulier des barres de support (4) ayant des longueurs de 50 mm, 75 mm, 100 mm, 125 mm, 150 mm, 175 mm, 200 mm, 225 mm, 250 mm, 275 mm et/ou 300 mm.

7. Système d'alimentation en oxygène d'urgence pour aéronef (48) selon l'une quelconque des revendications précédentes, dans lequel la pluralité de barres de support (4) sont une pluralité de tubes de support ayant un noyau creux.

8. Système d'alimentation en oxygène d'urgence pour aéronef (48) selon l'une quelconque des revendications précédentes, dans lequel la pluralité de connecteurs en T (6) et la pluralité de connecteurs en L (8) sont fabriqués en matière plastique.

9. Système d'alimentation en oxygène d'urgence pour aéronef (48) selon la revendication 8, dans lequel la pluralité de connecteurs en T (6) et la pluralité de connecteurs en L (8) sont fabriqués par moulage, en particulier par moulage par injection.

10. Système d'alimentation en oxygène d'urgence pour aéronef (48) selon l'une quelconque des revendications précédentes, dans lequel la pluralité de barres de support (4) sont fixées à la pluralité de connecteurs en T (6) et à la pluralité de connecteurs en L (8) par ajustement serré et/ou par collage.

11. Système d'alimentation en oxygène d'urgence pour aéronef (48) selon l'une quelconque des revendications précédentes, dans lequel la pluralité de connecteurs en T et en L comprend au moins un connecteur combiné en T et en L (7), qui est configuré pour coupler trois barres de support (4) dans une configuration de type F, dans laquelle une première et une deuxième des trois barres de support (4) s'étendent parallèlement l'une à l'autre et une troisième barre de support (4) s'étend orthogonalement aux première et deuxième barres de support (4).

12. Système d'alimentation en oxygène d'urgence pour aéronef (48) selon l'une quelconque des revendications précédentes, comprenant en outre au moins un élément de fixation (60) pour fixer le cadre de support modulaire (2) à une structure de support (58) à l'intérieur d'un aéronef (100).

13. Aéronef (100), en particulier un avion ou un hélicoptère, comprenant un système d'alimentation en oxygène d'urgence pour aéronef (48) selon l'une quelconque des revendications précédentes, dans lequel le système d'alimentation en oxygène d'urgence pour aéronef (48) est en particulier prévu à l'intérieur d'une cabine passagers (102) de l'aéronef (100).

14. Procédé d'assemblage d'un système d'alimentation en oxygène d'urgence pour aéronef (48), dans lequel le procédé comprend :
la fourniture d'une pluralité de barres de support (4) ;
la fourniture d'une pluralité de connecteurs en T (6) et d'une pluralité de connecteurs en L (8) ;
la formation d'une grille de support d'un cadre de support modulaire (2) à partir de la pluralité de barres de support (4), de la pluralité de connecteurs en T (6) et de la pluralité de connecteurs en L (8), la grille de support définissant une pluralité de champs de composants fonctionnels ;
dans au moins l'un de la pluralité de champs de composants fonctionnels, la disposition d'un support de composant fonctionnel (10a, 10b, 10c), le support de composant fonctionnel (10a, 10b, 10c) étant fixé à au moins une barre de support adjacente (4) de la grille de support et le support de composant fonctionnel (10a, 10b, 10c) étant configuré pour maintenir un composant fonctionnel (52, 54, 56) du système d'alimentation en oxygène d'urgence pour aéronef (48) ; et
la fixation d'au moins l'un d'un conteneur de masque à oxygène (52) et d'une source d'oxygène (54) en tant que composant fonctionnel (52, 54, 56) du système d'alimentation en oxygène d'urgence pour aéronef (48) au support de composant fonctionnel (10a, 10b, 10c).

15. Procédé selon la revendication 14, comprenant en outre l'étape de fixation du cadre de support modulaire (2) à une structure de support (58) à l'intérieur d'un aéronef (100), en particulier la fixation du cadre de support modulaire (2) à une structure de support (58) à l'intérieur d'une cabine passagers (102) d'un aéronef (100).
